# EUROPEAN PATENT APPLICATION

(11) **EP 4 842 109 A1**
(43) Date of publication of application: **18.11.2026**
(21) Application number: 25739030.2
(22) Date of filing: 09.01.2025
(51) Int. Cl.: H04W 72/1268, H04W 72/23, H04W 72/21, H04L 5/00, H04L 27/26, H04W 84/06

(54) **TRANSMISSION AND RECEPTION METHOD AND APPARATUS IN NON-TERRESTRIAL NETWORK**

(30) Priority: 10.01.2024 KR 20240004260; 31.01.2024 KR 20240015102; 13.02.2024 KR 20240020487
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Mooser, Sebastian Thomas
(86) International application number: PCT/KR2025/000500
(87) International publication number: WO 2025/150917

(57) **Abstract**

Provided are a method by which an apparatus performs wireless communication and an apparatus supporting same. The apparatus may obtain information related to a transmission resource and perform transmission on the basis of L sub-resource groups in the transmission resource. For example, the size of a transport block for the transmission may be determined on the basis of the size of the sub-resource group in the transmission resource.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, highfrequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method may be provided. For example, the method may comprise: obtaining information related to a transmission resource; and performing transmission based on L sub-resource groups within the transmission resource. For example, a transport block size for the transmission may be determined based on a size of a sub-resource group within the transmission resource. For example, L may be a positive integer.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

Based on an embodiment of the present disclosure, a non-transitory computer-readable storage medium storing instructions may be provided. For example, the instructions, when executed, may cause a device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIG. 8 shows a procedure for performing uplink transmission and reception, based on an embodiment of the present disclosure.
FIG. 9 shows an example in which an orthogonal cover code (OCC) is applied before a TF precoding within a symbol, based on an embodiment of the present disclosure.
FIG. 10 shows a method for a device to perform wireless communication, based on an embodiment of the present disclosure.
FIG. 11 shows a method for a base station to perform wireless communication, based on an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

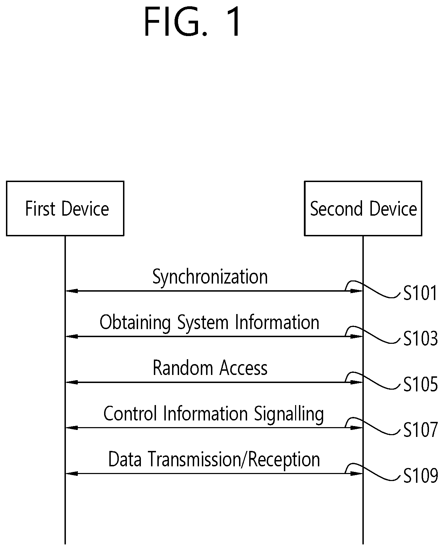

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

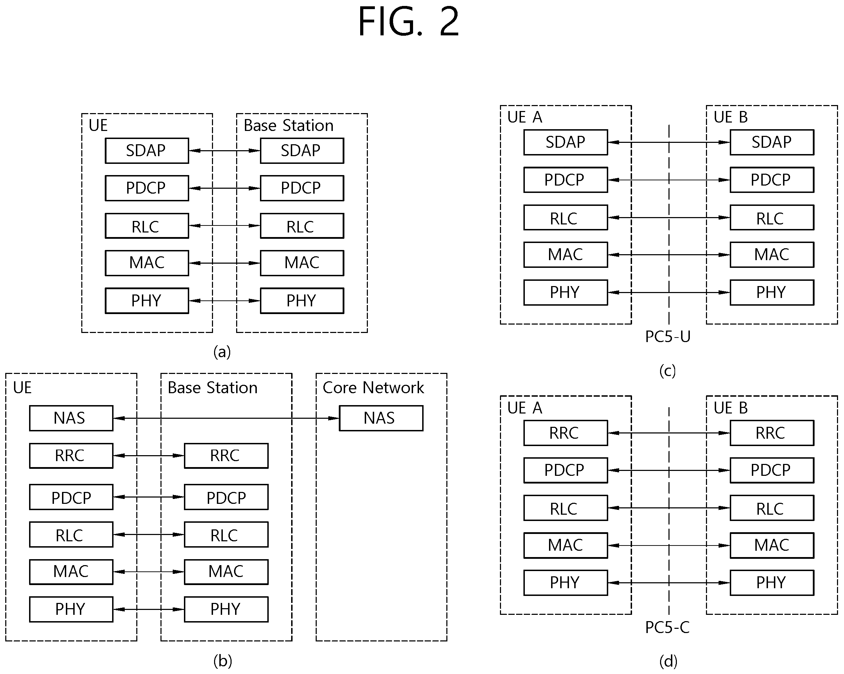

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, i.e., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, re-configuration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

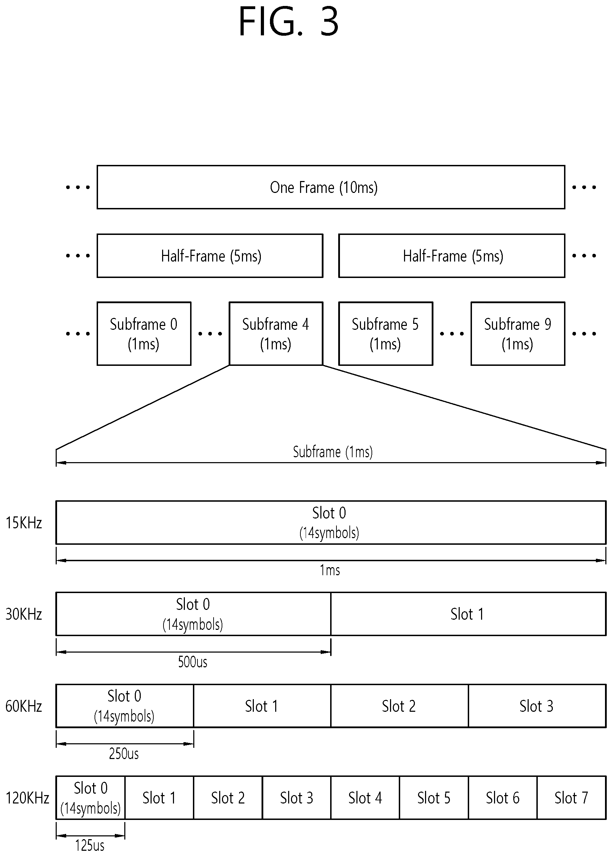

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five lms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

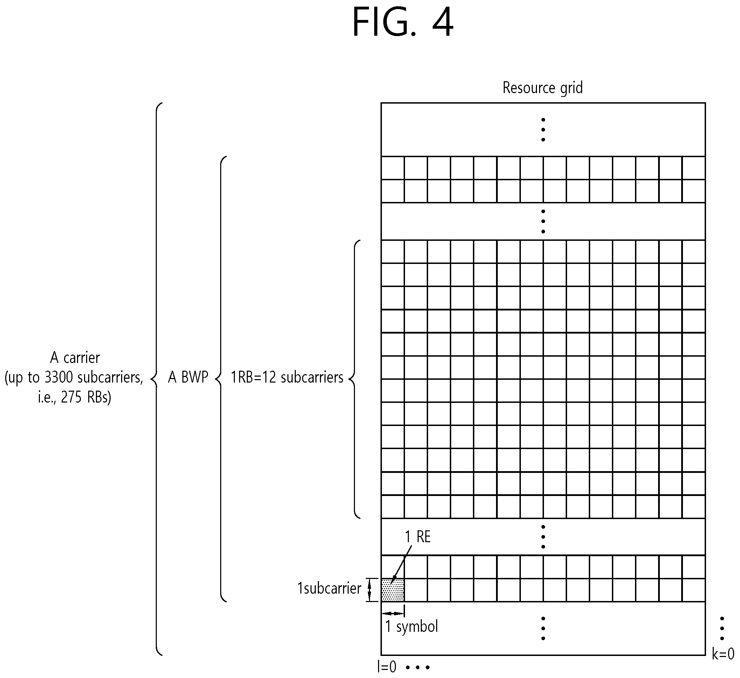

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

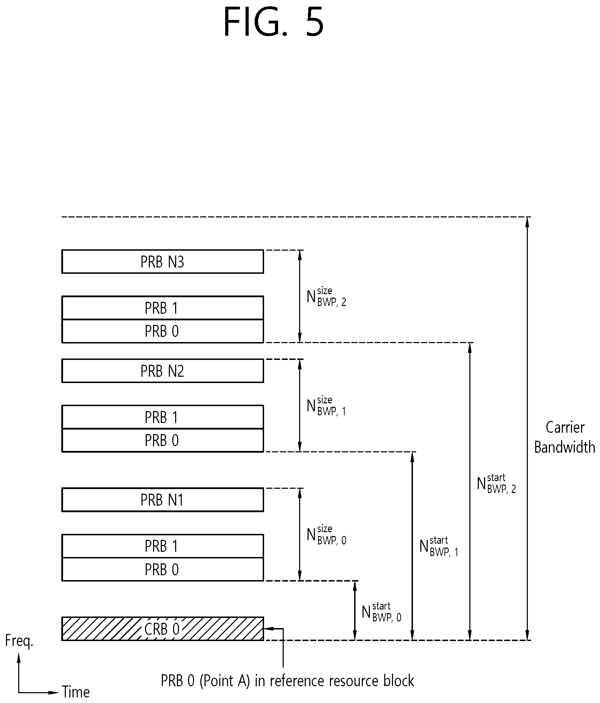

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

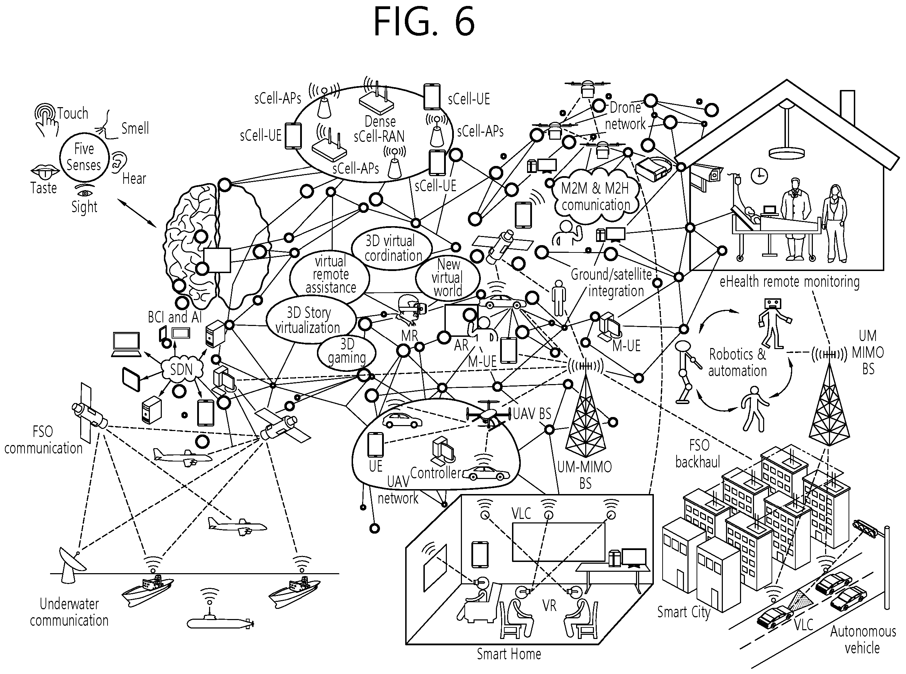

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.

- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.

- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

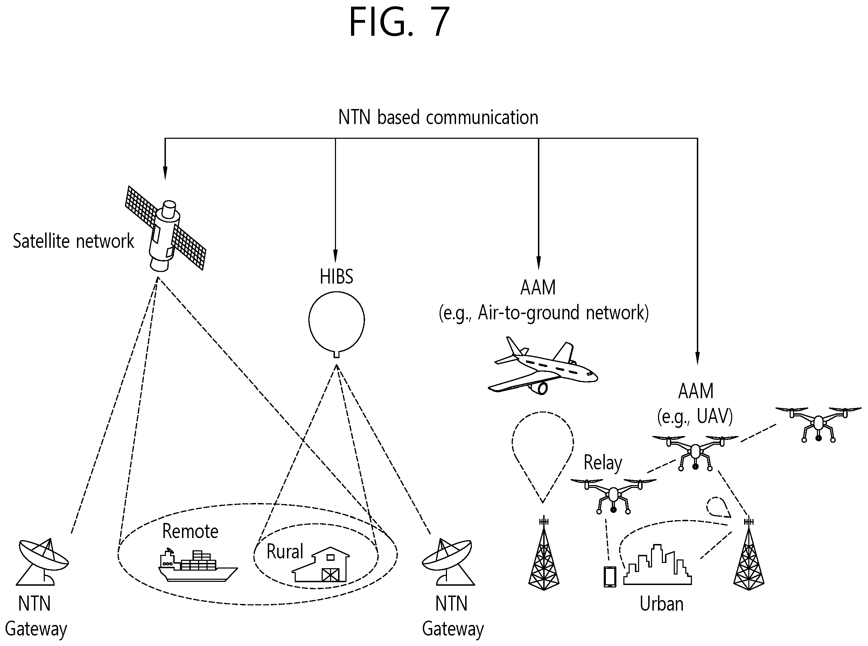

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

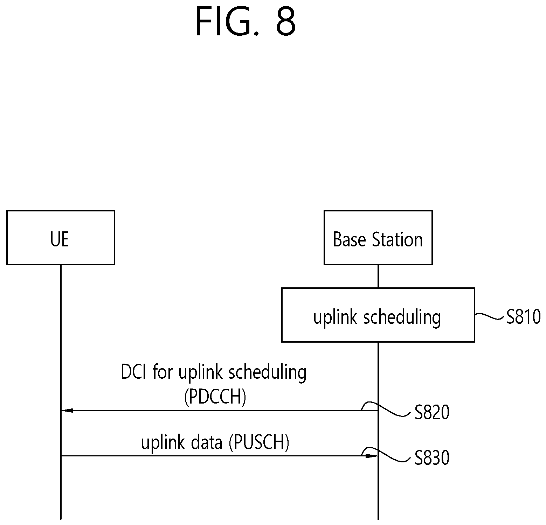

FIG. 8 shows a procedure for performing uplink transmission and reception, based on an embodiment of the present disclosure. The embodiment of FIG. 8 may be combined with various embodiments of the present disclosure.

Referring to FIG. 8, in step S810, a base station may schedule an uplink transmission such as a frequency/time resource, a transmission layer, an uplink precoder, a modulation and coding scheme (MCS), etc. For example, the base station may determine a beam for a PUSCH transmission of a UE.

In step S820, the UE may receive, from the base station, a DCI for uplink scheduling (e.g., including scheduling information of the PUSCH) on a PDCCH.

For example, a DCI format 0_0 or 0_1 may be used for uplink scheduling. For example, the DCI format 0_1 may include information as follows: identifier for DCI formats, UL/supplementary uplink (SUL) indicator, bandwidth part indicator, frequency domain resource assignment, time domain resource assignment, frequency hopping flag, modulation and coding scheme (MCS), SRS resource indicator (SRI), precoding information and number of layers, antenna port(s), SRS request, DMRS sequence initialization, uplink shared channel (UL-SCH) indicator.

For example, SRS resources configured within an SRS resource set associated with a higher layer parameter 'usage' may be indicated by an SRS resource indicator field. For example, 'spatialRelationInfo' may be configured for each SRS resource, and a value thereof may be one of {CRI, SSB, SRI}.

In step S830, the UE may transmit uplink data to the base station on the PUSCH.

For example, if the UE detects the PDCCH including the DCI format 0_0 or 0_1, the UE may transmit the corresponding PUSCH according to an indication by the corresponding DCI. For example, two transmission schemes of a codebook-based transmission and a non-codebook-based transmission may be supported for the PUSCH transmission.

For example, if a higher layer parameter 'txConfig' is set to 'codebook', the UE may be configured with the codebook-based transmission. On the other hand, for example, if the higher layer parameter 'txConfig' is set to 'nonCodebook', the UE may be configured with the non-codebook-based transmission. For example, if the higher layer parameter 'txConfig' is not configured, the UE may not expect to be scheduled by the DCI format 0_1. For example, if the PUSCH is scheduled by the DCI format 0_0, the PUSCH transmission may be based on a single antenna port.

Recently, in a communication field, an introduction of a non-terrestrial network (NTN) utilizing a satellite or the like as a network node is being actively discussed. The satellite supporting the NTN may be classified based on a flight orbit and a characteristic of the satellite, such as a geostationary earth orbit (GEO), a medium earth orbit (MEO), a low earth orbit (LEO), and the like, and generally has a characteristic that an altitude of the satellite is very high. Therefore, a service area of the satellite may have a very wide coverage characteristic, and the number of target UEs within the corresponding service area may be relatively large. Herein, an uplink data channel of the NTN may be repeatedly transmitted for a purpose of uplink coverage extension or the like, and in this case, an uplink transmission capacity may be insufficient compared to transmission resources. Therefore, the NTN service may be required to support multiplexing for a plurality of UE(s). Hereinafter, in the present disclosure, a method for achieving capacity increase and/or multiplexing of the uplink data channel by utilizing an orthogonal cover code (OCC) and a device supporting the same are proposed.

[Proposed Method #01] If the UE can apply an OCC within an (OFDM) symbol when transmitting an uplink data channel (e.g., PUSCH), an application of the OCC within the (OFDM) symbol may be supported only if an allocated resource size of the uplink data channel (e.g., PUSCH) is a specific size. Herein, for example, the OCC within the (OFDM) symbol may refer to an operation of applying the OCC to data transmitted within the (OFDM) symbol. Herein, for example, the OCC within the (OFDM) symbol may be applied before a time-frequency (TF) precoding and/or after the TF precoding. Herein, for example, the TF precoding may refer to a DFT spreading or a DFT precoding for supporting a DFT-s-OFDM scheme. Herein, for example, whether the OCC is applied may be configured/indicated by the base station. Herein, for example, if the base station configures/indicates the application of the OCC within the (OFDM) symbol, the UE may determine that the application of the OCC within the (OFDM) symbol is valid if a resource of the uplink data channel (e.g., PUSCH) is configured/indicated as a specific size, and in other cases, the UE may determine that the application of the OCC within the (OFDM) symbol is not valid.

For example, in the next-generation mobile communication system based on an embodiment of the present disclosure, assume that the UE transmits the uplink data channel (e.g., PUSCH). Herein, for example, when the UE transmits the uplink data channel, a method of applying the OCC within the (OFDM) symbol may be considered. For example, the UE may divide an allocatable resource group (hereinafter, a first resource group) within the (OFDM) symbol into L (equal-sized) sub-resource group(s), and the UE may perform data repetition and/or the application of the OCC in a unit of the sub-resource group. Herein, for example, a resource to which the OCC is applied may be a resource before and/or after the UE applies the TF precoding (or the DFT spreading). Herein, for example, the application of the OCC within the (OFDM) symbol may presuppose data repetition within the (OFDM) symbol, and the data repetition within the (OFDM) symbol may have no advantage in terms of coverage improvement. Herein, for example, the application of the OCC within the (OFDM) symbol may be a function of supporting uplink multiplexing even within one physical resource block (PRB). Therefore, in the present disclosure, if the UE can apply the OCC within the (OFDM) symbol when transmitting the uplink data channel (e.g., PUSCH), the application of the OCC within the (OFDM) symbol may be supported only if the allocated resource size of the uplink data channel (e.g., PUSCH) is a specific size. For example, the specific size may be 1 PRB. Based on the proposal of the present disclosure, by clarifying a case of the application of the OCC within the (OFDM) symbol between the base station and the UE, there is an advantage of supporting the application of the OCC in a valid case, while removing unnecessary calculation and/or complexity of the UE in other cases.

The [Proposed Method #01] may be applied by being combined with other proposed method(s) within the range in which the proposed operations do not conflict.

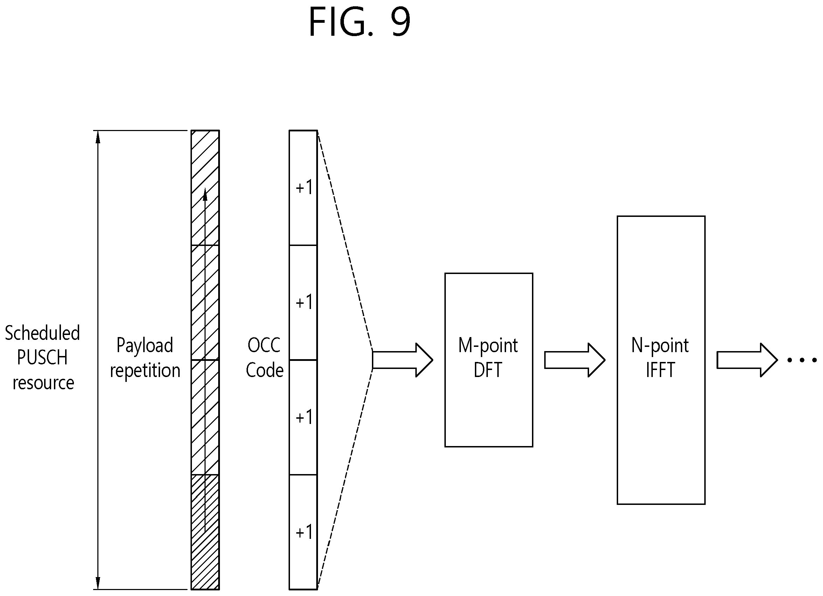

FIG. 9 shows an example in which an orthogonal cover code (OCC) is applied before a TF precoding within a symbol, based on an embodiment of the present disclosure. The embodiment of FIG. 9 may be combined with various embodiments of the present disclosure.

[Proposed Method #02] If the UE can apply an OCC within an (OFDM) symbol when transmitting an uplink data channel (e.g., PUSCH), the application of the OCC within the (OFDM) symbol may be supported only if a phase tracking reference signal (PT-RS) pattern within the uplink data channel (e.g., PUSCH) is a specific pattern. Herein, for example, the OCC within the (OFDM) symbol may refer to an operation of applying the OCC to data transmitted within the (OFDM) symbol. Herein, for example, the OCC within the (OFDM) symbol may be applied before a TF precoding and/or after the TF precoding. Herein, for example, the TF precoding may refer to a DFT spreading or a DFT precoding for supporting a DFT-s-OFDM scheme. Herein, for example, whether the OCC is applied may be configured/indicated by the base station. Herein, for example, the specific pattern may include a case where the PT-RS is not allocated. Herein, for example, if the base station configures/indicates the application of the OCC within the (OFDM) symbol, the UE may determine that the application of the OCC within the (OFDM) symbol is valid if the PT-RS pattern within the uplink data channel (e.g., PUSCH) is configured/indicated as a specific pattern, and in other cases, the UE may determine that the application of the OCC within the (OFDM) symbol is not valid.

For example, in the next-generation mobile communication system based on an embodiment of the present disclosure, assume that the UE transmits the uplink data channel (e.g., PUSCH). Herein, a method of applying the OCC within the (OFDM) symbol when the UE transmits the uplink data channel may be considered. For example, the UE may divide an allocatable resource group (hereinafter, a first resource group) within the (OFDM) symbol into L (equal-sized) sub-resource group(s), and the UE may perform data repetition and/or the application of the OCC in a unit of the sub-resource group. Herein, for example, a resource to which the OCC is applied may be a resource before the UE applies the TF precoding (or the DFT spreading). Herein, for example, if the UE transmits a phase tracking reference signal (PT-RS), it may be allocated in a resource before the TF precoding, and a position where PT-RS sample(s) are allocated may vary based on the number of PT-RS groups, the number of samples per PT-RS group, and the like. Herein, for example, data of the same size should be repeated in order to apply the OCC in the L sub-resource group(s), but if no special restriction is made, a case where PT-RS samples are allocated only for some sub-resource groups among all the sub-resource group(s) may occur due to an inherent allocation scheme of the PT-RS. In this case, data that is not perfectly repeated occurs and may affect interference on uplink transmission of the UE transmitted with a different OCC. Therefore, in the present disclosure, if the UE can apply the OCC within the (OFDM) symbol when transmitting the uplink data channel (e.g., PUSCH), the application of the OCC within the (OFDM) symbol may be supported only if the PT-RS pattern within the uplink data channel (e.g., PUSCH) is a specific pattern. For example, if the number of PT-RS samples is equally allocated for the L sub-groups divided for the application of the OCC, the application of the OCC within the (OFDM) symbol may be supported for the corresponding PT-RS pattern. Based on the proposal of the present disclosure, there is an advantage that the application of the OCC within the (OFDM) symbol can be supported even for PUSCH transmission including the PT-RS.

For example, if, for a PUSCH, an OCC is configured/indicated and a PT-RS is also configured/indicated, the UE may not expect such a configuration/indication (e.g., the UE determines it as a configuration/indication error of the base station) or may ignore one of the OCC configuration/indication and the PT-RS configuration/indication. For example, if the OCC is configured/indicated, the UE may not apply a PT-RS configuration/indication for the corresponding PUSCH. Alternatively, for example, if the PT-RS is configured/indicated, the UE may not apply an OCC configuration/indication for the corresponding PUSCH. Alternatively, the UE may not expect to be simultaneously configured/indicated with the OCC and the PT-RS by the base station. If simultaneously configured/indicated, the UE may not transmit the corresponding PUSCH or an operation in the corresponding case may follow a UE implementation.

The [Proposed Method #02] may be applied by being combined with other proposed method(s) within the range in which the proposed operations do not conflict.

[Proposed Method #03] If the UE can apply an OCC between (OFDM) symbol groups when transmitting an uplink data channel (e.g., PUSCH), the application of the OCC within the (OFDM) symbol(s) may be supported only if a demodulation reference signal (DM-RS) pattern within the uplink data channel (e.g., PUSCH) is a specific pattern. Herein, for example, the OCC between the (OFDM) symbol groups may refer to an operation of applying the OCC in a unit of the (OFDM) symbol group. Herein, for example, whether the OCC is applied may be configured/indicated by the base station. Herein, for example, if the base station configures/indicates the application of the OCC between the (OFDM) symbol groups, the UE may determine that the application of the OCC between the (OFDM) symbol groups is valid if the DM-RS pattern within the uplink data channel (e.g., PUSCH) is configured/indicated as a specific pattern, and in other cases, the UE may determine that the application of the OCC between the (OFDM) symbol groups is not valid.

For example, in the next-generation mobile communication system based on an embodiment of the present disclosure, assume that the UE transmits the uplink data channel (e.g., PUSCH). Herein, a method of applying the OCC between the (OFDM) symbol groups when the UE transmits the uplink data channel may be considered. For example, the UE may divide an allocatable resource group (hereinafter, a first resource group) within a (single) PUSCH into L (equal-sized) symbol group(s), and the UE may perform data repetition and/or the application of the OCC in a unit of the symbol group. Herein, for example, if the UE transmits a demodulation reference signal (DM-RS), a symbol position where the DM-RS is allocated may vary based on a pattern. Herein, for example, data of the same size should be repeated in order to apply the OCC for the L symbol group(s), but if no special restriction is made, a case where the DM-RS is allocated only for some symbol groups among all the symbol group(s) may occur due to an inherent allocation scheme of the DM-RS. In this case, data that is not perfectly repeated occurs and may affect interference on uplink transmission of the UE transmitted with a different OCC. Therefore, in the present disclosure, if the UE can apply the OCC between the (OFDM) symbol groups when transmitting the uplink data channel (e.g., PUSCH), the application of the OCC within the (OFDM) symbol(s) may be supported only if the DM-RS pattern within the uplink data channel (e.g., PUSCH) is a specific pattern. For example, if DM-RS resources are equally allocated for the L symbol group(s) divided for the application of the OCC, the application of the OCC may be supported for the corresponding DM-RS pattern. Based on the proposal of the present disclosure, there is an advantage that the application of the OCC between the (OFDM) symbol groups can be supported even for PUSCH transmission in which the DM-RS pattern changes.

For example, if an OCC is configured/indicated for a PUSCH and also a DM-RS pattern incompatible with the OCC is configured/indicated, the UE may not expect such a configuration/indication (e.g., the UE determines it as a configuration/indication error of the base station) or may ignore the OCC configuration/indication or may skip transmission of the corresponding PUSCH. For example, if the DM-RS pattern incompatible with the OCC is configured/indicated for the PUSCH, the UE may invalidate the OCC configuration/indication or may skip transmission of the corresponding PUSCH. Alternatively, an operation in the corresponding case may follow a UE implementation.

The [Proposed Method #03] may be applied by being combined with other proposed method(s) within the range in which the proposed operations do not conflict.

[Proposed Method #04] If the UE can apply an OCC within a (single) uplink data channel (e.g., PUSCH) transmission resource when transmitting the uplink data channel (e.g., PUSCH), a resource group within the (single) uplink data channel (e.g., PUSCH) may be divided into L (equal) sub-resource group(s), and the UE may perform one or more of following operations by utilizing the sub-resource group(s).
(1) transport block size (TBS) determination and/or TBS scaling based on a size of the sub-resource group
(2) data and/or reference signal (RS) and/or uplink control information (UCI) mapping based on the sub-resource group

For example, the TBS within the uplink data channel (e.g., PUSCH) may be determined and/or scaled based on the size of the sub-resource group. Herein, for example, the OCC within the (single) uplink data channel (e.g., PUSCH) transmission resource may refer to an operation of applying the OCC to data transmitted within the (single) uplink data channel (e.g., PUSCH), and may include the OCC within the (OFDM) symbol and/or the OCC between the (OFDM) symbol groups. Herein, for example, the OCC within the (single) uplink data channel (e.g., PUSCH) transmission resource may be applied before a TF precoding and/or after the TF precoding. Herein, for example, the TF precoding may refer to a DFT spreading or a DFT precoding for supporting a DFT-s-OFDM scheme. Herein, for example, whether the OCC is applied may be configured/indicated by the base station. Herein, for example, the OCC may be applied in a unit of the sub-resource group. For example, a length-L OCC may be applied for the L sub-resource group(s). Herein, for example, rate-matching may be applied to exclude M resources from the size of the sub-resource group. For example, the M may refer to a resource size to be commonly excluded between the sub-resource group(s) by considering a (maximum) RS allocation resource size (within the sub-resource group) and the like, and the UE may determine it in a (pre-)arranged manner or the base station may (pre-)configure/indicate it. Herein, for example, the UE may determine the OCC and/or cyclic shift (CS) for a reference signal (RS) based on the OCC value within the (single) uplink data channel (e.g., PUSCH) transmission resource.

For example, in the next-generation mobile communication system based on an embodiment of the present disclosure, assume that the UE transmits an uplink data channel (e.g., PUSCH). Herein, for example, a method of applying the OCC within the (single) uplink data channel (e.g., PUSCH) transmission resource when the UE transmits the uplink data channel may be considered. For example, the UE may divide an allocatable resource group (hereinafter, a first resource group) within the (single) uplink data channel (e.g., PUSCH) into L (equal-sized) sub-resource group(s), and the UE may perform data repetition and/or the application of the OCC in a unit of the sub-resource group. Herein, for example, a resource to which the OCC is applied may be a resource before the UE applies the TF precoding (or the DFT spreading). Herein, for example, the sub-resource group may be regarded as a virtual resource allocation for the corresponding uplink data channel (e.g., PUSCH). Herein, for example, the transport block size (TBS) which the UE intends to transmit via the uplink data channel may be determined based on the size of the sub-resource group. For example, the UE may perform TBS determination based on the size of the sub-resource group or may scale the TBS which is determined based on the first resource group based on the size of the sub-resource group. Herein, for example, the UE may perform mapping for data and/or reference signal (RS) and/or uplink control information (UCI) and the like based on the sub-resource group (or the size of the sub-resource group). Herein, for example, data of the same size should be repeated in order to apply the OCC between the L sub-resource groups, but if no special restriction is made, a non-uniform overhead (e.g., RS allocation) may occur for each sub-resource group due to an inherent allocation scheme (or pattern) of the RS. Herein, for example, in order to make a data allocation amount for each sub-resource group identical, a method of calculating a maximum overhead among overheads for each sub-resource group (reference resource allocation, etc.) and then commonly excluding it for the sub-resource groups may be considered. For example, the maximum overhead may be a maximum value among RS resource allocation amounts for each sub-resource group. Based on the proposed method of the present disclosure, when applying the OCC within the (single) uplink data channel (e.g., PUSCH), the sub-resource group, which is a unit to which the OCC is applied, can be regarded as an allocated resource group of a conventional (single) uplink data channel (e.g., PUSCH). Through this, there is an advantage of lowering the complexity of the UE by inheriting conventional rules as much as possible. Also, by calculating a common overhead for each sub-resource group, a data resource imbalance problem between OCC application units according to an inherent pattern of the RS can be resolved.

For example, if the UE can apply the OCC within the (single) uplink data channel (e.g., PUSCH) transmission resource when transmitting the uplink data channel (e.g., PUSCH), the resource group within the (single) uplink data channel (e.g., PUSCH) may be divided into L (equal) sub-resource group(s), and the OCC may be applied for the sub-resource group(s). Herein, for example, a TBS calculation scheme for the PUSCH may be a scheme of calculating the TBS based on total resources allocated for the PUSCH (first TBS) and then applying scaling to the first TBS. For example, a scaling value may be directly configured/indicated by the base station (for each OCC length) or may be derived by a combination of the OCC length and/or a TBS target multiplier value configured by the base station. For example, if the OCC length is 4, 1/4 is used as a basic scaling value, and it may be in the form of multiplying the TBS target multiplier value r = 1.5 configured by the base station. For example, the TBS scaling value and/or the TBS target multiplier value (or candidate values thereof) may be configured by the base station through higher layer signalling and/or may be indicated through a dynamic control signal (e.g., DCI). For example, the candidate values of the TBS scaling value and/or the TBS target multiplier value (for each OCC length) may be configured, and one of the (configured) candidate values of the TBS scaling value and/or the TBS target multiplier value may be indicated through dynamic control information (DCI). Herein, for example, the candidate values for the (pre-) (configured) TBS scaling value and/or the TBS scaling target multiplier value may be interpreted differently based on the OCC length configured/indicated (within the DCI).

For example, if the UE can apply the OCC within the (single) uplink data channel (e.g., PUSCH) transmission resource when transmitting the uplink data channel (e.g., PUSCH), the UE may determine the OCC and/or the CS for the reference signal (RS) based on the OCC value (for data) within the (single) uplink data channel (e.g., PUSCH) transmission resource. Alternatively, for example, the UE may determine the OCC value (for data) within the PUSCH transmission resource based on the OCC and/or the CS indicated/configured for the RS for the corresponding PUSCH.

The [Proposed Method #04] may be applied by being combined with other proposed method(s) within the range in which the proposed operations do not conflict.

[Proposed Method #05] If the UE can apply an OCC within a (single) uplink data channel (e.g., PUSCH) transmission resource when transmitting the uplink data channel (e.g., PUSCH), and if an uplink control channel (e.g., PUCCH) transmission occurs at a transmission timing of the uplink data channel (e.g., PUSCH) to which the OCC is applied, the UE may release the application of the OCC and follow multiplexing rules when the OCC is not applied. Herein, for example, the OCC within the (single) uplink data channel (e.g., PUSCH) transmission resource may refer to an operation of applying the OCC to data transmitted within the (single) PUSCH, and may include the OCC within the (OFDM) symbol and/or the OCC between the (OFDM) symbol groups. Herein, for example, the OCC within the (single) uplink data channel (e.g., PUSCH) transmission resource may be applied before a TF precoding and/or after the TF precoding. Herein, for example, the TF precoding may refer to a DFT spreading or a DFT precoding for supporting a DFT-s-OFDM scheme. Herein, for example, whether the OCC is applied may be configured/indicated by the base station.

For example, in the next-generation mobile communication system based on an embodiment of the present disclosure, assume that the UE transmits the uplink data channel (e.g., PUSCH). Herein, for example, a method of applying the OCC within the (single) uplink data channel (e.g., PUSCH) transmission resource when the UE transmits the uplink data channel may be considered. For example, the UE may divide an allocatable resource group (hereinafter, a first resource group) within the (single) uplink data channel (e.g., PUSCH) into L (equal-sized) sub-resource group(s), and the UE may perform data repetition and/or the application of the OCC in a unit of the sub-resource group. Herein, for example, a resource to which the OCC is applied may be a resource before the UE applies the TF precoding (or the DFT spreading). Herein, for example, a scheme of applying the OCC within the (single) uplink data channel (e.g., PUSCH) may be a new transmission format for the uplink data transmission channel. Herein, for example, the new transmission format based on the OCC for the uplink data transmission channel may not be able to support existing multiplexing rules, for example, a multiplexing rule in case of collision with the uplink control channel (e.g., PUCCH). Therefore, in the present disclosure, if the UE can apply the OCC within the (single) uplink data channel (e.g., PUSCH) when transmitting the uplink data channel (e.g., PUSCH), and if the uplink control channel (e.g., PUCCH) transmission is configured and/or indicated at the transmission timing of the uplink data channel (e.g., PUSCH) to which the OCC is applied, the UE may release the application of the OCC and follow the multiplexing rules when the OCC is not applied. Based on the proposed method of the present disclosure, when supporting the new transmission format based on the OCC for the uplink data transmission channel (e.g., PUSCH), there is an advantage that the multiplexing rule with the uplink control channel (e.g., PUCCH) and the like can be exception-handled in a relatively simple manner.

The [Proposed Method #05] may be applied by being combined with other proposed method(s) within the range in which the proposed operations do not conflict.

[Proposed Method #06] If the UE can apply an OCC for a transmission resource of an uplink data channel (e.g., PUSCH), in a case of applying a discrete Fourier transform (DFT)-based orthogonal cover code (OCC) (or an OCC in which a phase linearly increases/decreases) in a unit of the RB when transmitting data on the uplink data channel for total L RBs, transmission may be performed so that a linear increase/decrease characteristic of the phase between the OCCs is guaranteed at a boundary of (allocated) RBs. Herein, for example, whether the OCC is applied may be configured/indicated by the base station. Herein, for example, the DFT-based OCC (or the OCC in which the phase linearly increases) may mean that the OCC is composed of a column or a row of a DFT matrix, or that an absolute value of each element of the OCC is fixed and the phase is a code linearly increasing (according to a specific slope). Herein, for example, the guarantee of the phase linearity at the boundary of the allocated RB may be supported in a manner that the UE adds a phase configured/indicated by the base station to the OCC when applying the OCC in a (specific) RB, or the UE adds/multiplies a phase (pre-)arranged and/or defined between the base station and the UE to/by the OCC.

For example, in the next-generation mobile communication system based on an embodiment of the present disclosure, assume that the UE applies the OCC for the transmission resource of the uplink data channel (e.g., PUSCH) and transmits it. Herein, for example, the uplink data channel may be transmitted based on the DFT-s-OFDM scheme, and in this case, the OCC may be applied before the DFT precoding. Herein, for example, if data is repeated M times before the DFT precoding, it may be seen as a comb structure in a frequency axis resource region after the DFT precoding. Herein, for example, in a case of the DFT-based OCC (or the OCC in which the phase linearly increases/decreases) before the DFT precoding, the OCC may perform an action of shifting resources of the comb structure in the frequency axis. Herein, for example, the comb structure and the frequency axis shift based on the OCC can be an advantage in that the UL multiplexing may be supported even when allocated resource sizes are different from each other. Herein, for example, if the OCC is applied in a unit of the RB, if the phase linearity of the OCC is not guaranteed for a plurality of allocated RBs, the OCC may not act in the form of a frequency axis shift. Therefore, in the present disclosure, if the UE can apply the OCC for the transmission resource of the uplink data channel (e.g., PUSCH), in a case of applying the discrete Fourier transform (DFT)-based orthogonal cover code (OCC) (or the OCC in which the phase linearly increases/decreases) in a unit of the RB when transmitting data on the uplink data channel for total L RBs, the transmission may be performed so that the linear increase/decrease characteristic of the phase between the OCCs is guaranteed at the boundary of (allocated) RBs. Based on the proposal of the present disclosure, when the data before applying the OCC appears in the form of the comb in the frequency axis before the DFT precoding, the OCC performs the frequency axis shift action, which has an advantage of more easily supporting multiplexing between a plurality of uplink data channels.

The [Proposed Method #06] may be applied by being combined with other proposed method(s) within the range in which the proposed operations do not conflict.

[Proposed Method #07] If the UE can apply an OCC for a transmission resource of an uplink data channel (e.g., PUSCH), and if one resource block (RB) includes N resource elements (REs), and if the UE transmits data on the uplink data channel for total L RBs, the total L RBs may be divided into M (equal) resource groups, and after repeatedly allocating the data for the M resource groups, the discrete Fourier transform (DFT)-based orthogonal cover code (OCC) (or the OCC in which a phase linearly increases and/or decreases) defined as follows may be applied for the total resource region.$OCC \left(i\right) = \pm 2 π * k * i / \left(N*L\right) , i = 0 , 1 , . . . , \left(N*L-1\right) where k ∈ \left\{0, 1, ..., M-1\right\}$

Herein, for example, the k may be k ∈ ±{0, 1, ..., M-1}. Herein, for example, whether the OCC is applied may be configured/indicated by the base station. Herein, for example, the DFT-based OCC (or the OCC in which the phase linearly increases) may mean that the OCC is composed of a column or a row of a DFT matrix, or that an absolute value of each element of the OCC is fixed and the phase is a code linearly increasing (according to a specific slope).

For example, in the next-generation mobile communication system based on an embodiment of the present disclosure, assume that the UE applies the OCC for the transmission resource of the uplink data channel (e.g., PUSCH) and transmits it. Herein, for example, the uplink data channel may be transmitted based on the DFT-s-OFDM scheme, and in this case, the OCC may be applied before the DFT precoding. Herein, for example, if data is repeated M times before the DFT precoding, it may be seen as a comb structure in a frequency axis resource region after the DFT precoding. Herein, for example, in a case of the DFT-based OCC (or the OCC in which the phase linearly increases/decreases) before the DFT precoding, the OCC may perform an action of shifting resources of the comb structure in the frequency axis. Herein, for example, the comb structure and the frequency axis shift based on the OCC can be an advantage in that the UL multiplexing may be supported even when allocated resource sizes are different from each other. Therefore, in the present disclosure, if the UE can apply the OCC for the transmission resource of the uplink data channel (e.g., PUSCH), and if one resource block (RB) includes N resource elements (REs), and if the UE transmits the data on the uplink data channel for the total L RBs, the total L RBs may be divided into M (equal) resource groups, and after repeatedly allocating the data for the M resource groups, the discrete Fourier transform (DFT)-based orthogonal cover code (OCC) (or the OCC in which the phase linearly increases and/or decreases) defined as follows may be applied for the total resource region. $OCC \left(i\right) = \pm 2 π * k * i / \left(N*L\right) , i = 0 , 1 , . . . , \left(N*L-1\right) where k ∈ \left\{0, 1, ..., M-1\right\}$

Herein, for example, the k may be k ∈ ±{0, 1, ..., M-1}. Based on the proposal of the present disclosure, the data before applying the OCC appears in the form of the comb in the frequency axis before the DFT precoding, and the OCC performs the frequency axis shift action, which has an advantage of more easily supporting the multiplexing between the plurality of uplink data channels.

The [Proposed Method #07] may be applied by being combined with other proposed method(s) within the range in which the proposed operations do not conflict.

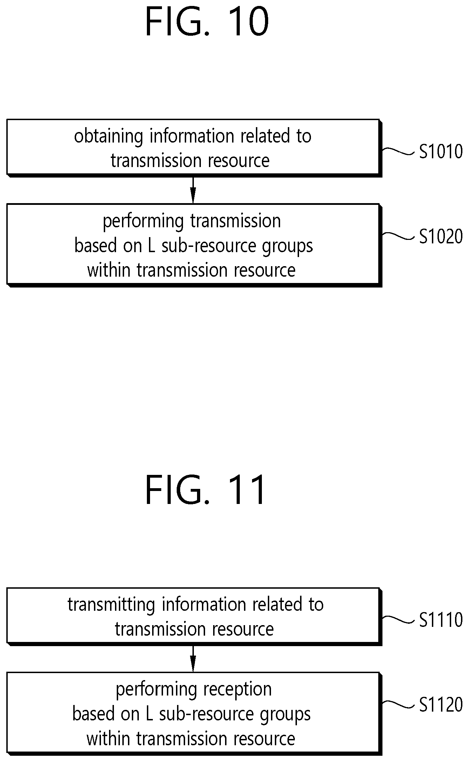

FIG. 10 shows a method for a device to perform wireless communication, based on an embodiment of the present disclosure. The embodiment of FIG. 10 may be combined with various embodiments of the present disclosure.

Referring to FIG. 10, in step S1010, the device may obtain information related to a transmission resource. In step S1020, the device may perform transmission based on L sub-resource groups within the transmission resource. For example, a transport block size for the transmission may be determined based on a size of a sub-resource group within the transmission resource. For example, L may be a positive integer.

For example, the transport block size may be determined by scaling a transport block size, which is determined based on a size of the transmission resource, based on the size of the sub-resource group.

For example, the transmission resource may be divided into the L sub-resource groups.

For example, the transmission may be repeatedly performed on the L sub-resource groups.

For example, an orthogonal cover code may be applied to the L sub-resource groups. For example, a length of the orthogonal cover code may be L.

For example, mapping for at least one of data, a reference signal, or control information may be performed based on the sub-resource group.

For example, whether to apply an orthogonal cover code to the L sub-resource groups may be based on a size of the transmission resource. For example, based on the size of the transmission resource being 1 physical resource block (PRB), an application of the orthogonal cover code to the L sub-resource groups may be allowed. For example, based on the size of the transmission resource not being 1 physical resource block (PRB), an application of the orthogonal cover code to the L sub-resource groups may not be allowed.

For example, whether to apply an orthogonal cover code to the L sub-resource groups may be based on a pattern of a reference signal mapped within the transmission resource. For example, the reference signal may be at least one of a phase tracking reference signal or a demodulation reference signal.

For example, the transmission resource may be a resource for transmitting an uplink data channel.

The proposed method can be applied to devices based on various embodiments of the present disclosure. First, the processor 102 of the device 100 may obtain information related to a transmission resource. In addition, the processor 102 of the device 100 may control the transceiver 106 to perform transmission based on L sub-resource groups within the transmission resource. For example, a transport block size for the transmission may be determined based on a size of a sub-resource group within the transmission resource. For example, L may be a positive integer.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

Based on an embodiment of the present disclosure, a non-transitory computer-readable storage medium storing instructions may be provided. For example, the instructions, when executed, may cause a device to perform operations comprising: obtaining information related to a transmission resource; and performing transmission based on L sub-resource groups within the transmission resource. For example, a transport block size for the transmission may be determined based on a size of a sub-resource group within the transmission resource. For example, L may be a positive integer.

FIG. 11 shows a method for a base station to perform wireless communication, based on an embodiment of the present disclosure. The embodiment of FIG. 11 may be combined with various embodiments of the present disclosure.

Referring to FIG. 11, in step S1110, the base station may transmit information related to a transmission resource. In step S1120, the base station may perform reception based on L sub-resource groups within the transmission resource. For example, a transport block size for the reception may be determined based on a size of a sub-resource group within the transmission resource. For example, L may be a positive integer.

For example, the transport block size may be determined by scaling a transport block size, which is determined based on a size of the transmission resource, based on the size of the sub-resource group.

For example, the transmission resource may be divided into the L sub-resource groups.

For example, the reception may be repeatedly performed on the L sub-resource groups.

For example, an orthogonal cover code may be applied to the L sub-resource groups. For example, a length of the orthogonal cover code may be L.

For example, mapping for at least one of data, a reference signal, or control information may be performed based on the sub-resource group.

For example, whether to apply an orthogonal cover code to the L sub-resource groups may be based on a size of the transmission resource. For example, based on the size of the transmission resource being 1 physical resource block (PRB), an application of the orthogonal cover code to the L sub-resource groups may be allowed. For example, based on the size of the transmission resource not being 1 physical resource block (PRB), an application of the orthogonal cover code to the L sub-resource groups may not be allowed.

For example, whether to apply an orthogonal cover code to the L sub-resource groups may be based on a pattern of a reference signal mapped within the transmission resource. For example, the reference signal may be at least one of a phase tracking reference signal or a demodulation reference signal.

For example, the transmission resource may be a resource for receiving an uplink data channel.

The proposed method can be applied to devices based on various embodiments of the present disclosure. First, the processor 202 of the base station 200 may control the transceiver 206 to transmit information related to a transmission resource. In addition, the processor 202 of the base station 200 may control the transceiver 206 to perform reception based on L sub-resource groups within the transmission resource. For example, a transport block size for the reception may be determined based on a size of a sub-resource group within the transmission resource. For example, L may be a positive integer.

Based on an embodiment of the present disclosure, a base station may be provided. For example, the base station may comprise: at least one transceiver; at least one processor; and at least one memory connected to the at least one processor and storing instructions. For example, the instructions, based on being executed by the at least one processor, may cause the base station to perform operations comprising: transmitting information related to a transmission resource; and performing reception based on L sub-resource groups within the transmission resource. For example, a transport block size for the reception may be determined based on a size of a sub-resource group within the transmission resource. For example, L may be a positive integer.

Based on an embodiment of the present disclosure, a processing device adapted to control a base station may be provided. For example, the processing device may comprise: at least one processor; and at least one memory connected to the at least one processor and storing instructions. For example, the instructions, based on being executed by the at least one processor, may cause the base station to perform operations comprising: transmitting information related to a transmission resource; and performing reception based on L sub-resource groups within the transmission resource. For example, a transport block size for the reception may be determined based on a size of a sub-resource group within the transmission resource. For example, L may be a positive integer.

Based on an embodiment of the present disclosure, a non-transitory computer-readable storage medium storing instructions. For example, the instructions, when executed, may cause a base station to perform operations comprising: transmitting information related to a transmission resource; and performing reception based on L sub-resource groups within the transmission resource. For example, a transport block size for the reception may be determined based on a size of a sub-resource group within the transmission resource. For example, L may be a positive integer.

Based on various embodiments of the present disclosure, the orthogonal cover code can be applied when performing the transmission in the non-terrestrial network. Therefore, a transmission capacity and/or a multiplexing capacity can be improved, and sufficient resources for performing repeated transmission for a purpose of coverage extension or the like can be secured.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

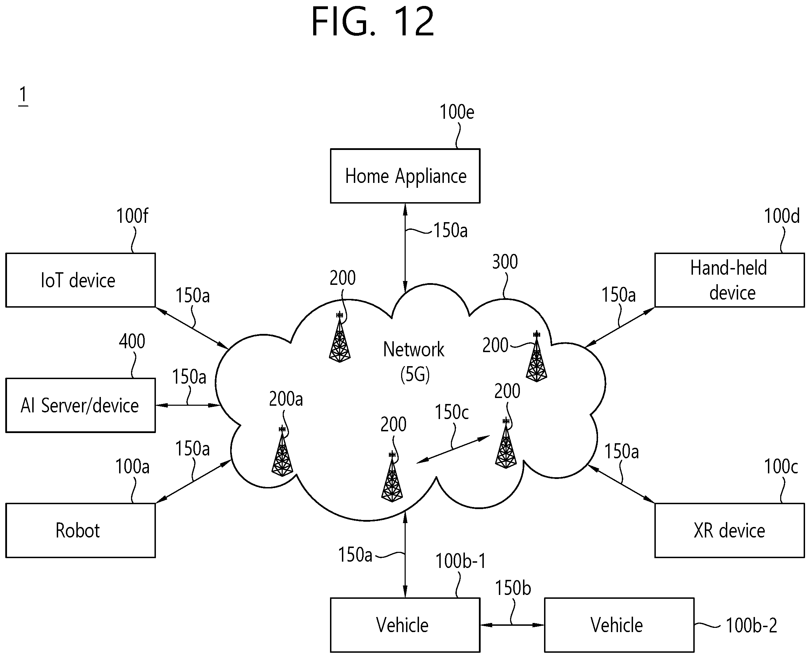

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

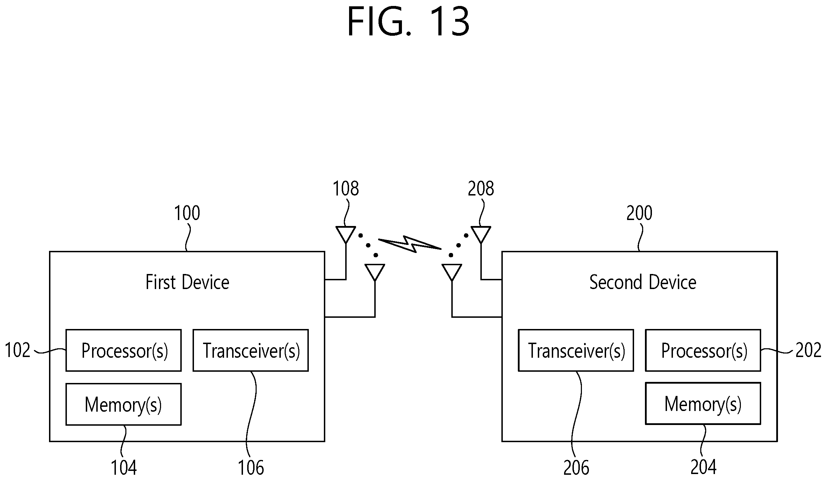

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

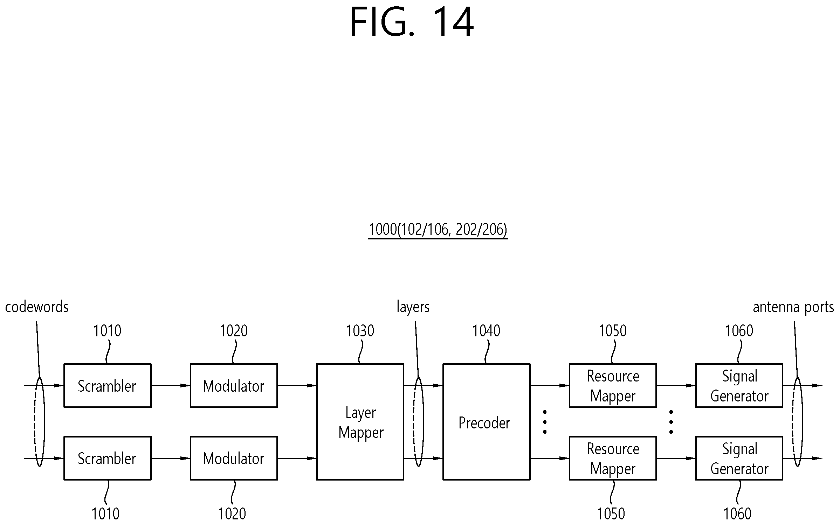

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

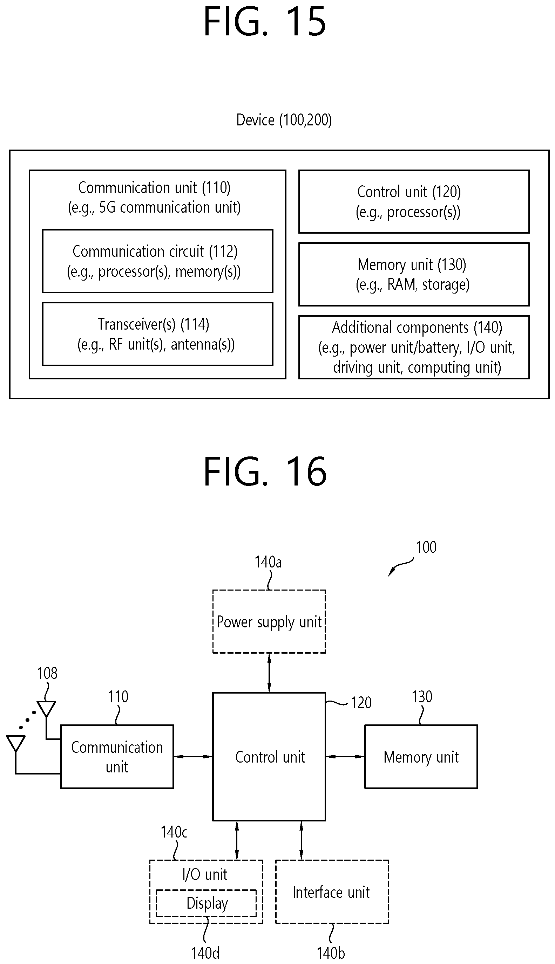

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

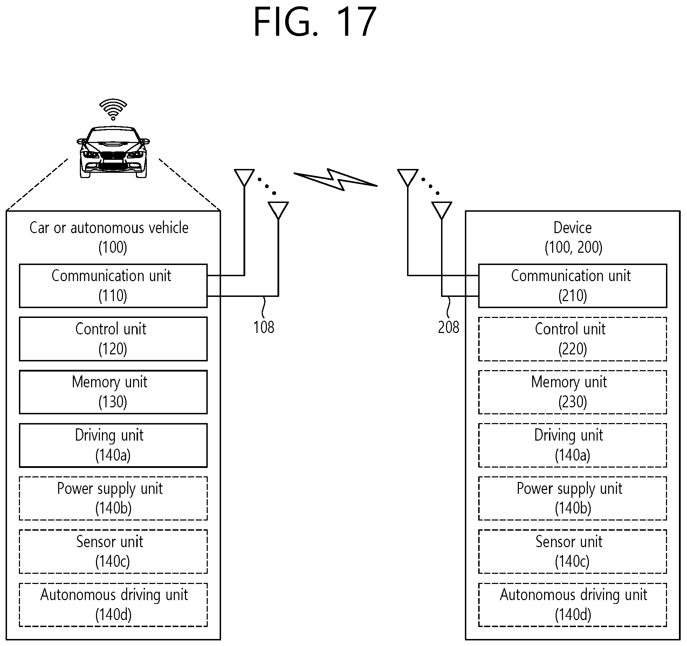

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining information related to a transmission resource; and
performing transmission based on L sub-resource groups within the transmission resource,
wherein a transport block size for the transmission is determined based on a size of a sub-resource group within the transmission resource, and
wherein L is a positive integer.

2. The method of claim 1, wherein the transport block size is determined by scaling a transport block size, which is determined based on a size of the transmission resource, based on the size of the sub-resource group.

3. The method of claim 1, wherein the transmission resource is divided into the L sub-resource groups.

4. The method of claim 1, wherein the transmission is repeatedly performed on the L sub-resource groups.

5. The method of claim 1, wherein an orthogonal cover code is applied to the L sub-resource groups.

6. The method of claim 5, wherein a length of the orthogonal cover code is L.

7. The method of claim 1, wherein mapping for at least one of data, a reference signal, or control information is performed based on the sub-resource group.

8. The method of claim 1, wherein whether to apply an orthogonal cover code to the L sub-resource groups is based on a size of the transmission resource.

9. The method of claim 8, wherein, based on the size of the transmission resource being 1 physical resource block (PRB), an application of the orthogonal cover code to the L sub-resource groups is allowed.

10. The method of claim 8, wherein, based on the size of the transmission resource not being 1 physical resource block (PRB), an application of the orthogonal cover code to the L sub-resource groups is not allowed.

11. The method of claim 1, wherein whether to apply an orthogonal cover code to the L sub-resource groups is based on a pattern of a reference signal mapped within the transmission resource.

12. The method of claim 11, wherein the reference signal is at least one of a phase tracking reference signal or a demodulation reference signal.

13. The method of claim 1, wherein the transmission resource is a resource for transmitting an uplink data channel.

14. A device, comprising:
at least one transceiver;
at least one processor; and
at least one memory connected to the at least one processor and storing instructions that, based on being executed by the at least one processor, cause the device to perform operations comprising:
obtaining information related to a transmission resource; and
performing transmission based on L sub-resource groups within the transmission resource,
wherein a transport block size for the transmission is determined based on a size of a sub-resource group within the transmission resource, and
wherein L is a positive integer.

15. A processing device adapted to control a device, the processing device comprising:
at least one processor; and
at least one memory connected to the at least one processor and storing instructions that, based on being executed by the at least one processor, cause the device to perform operations comprising:
obtaining information related to a transmission resource; and
performing transmission based on L sub-resource groups within the transmission resource,
wherein a transport block size for the transmission is determined based on a size of a sub-resource group within the transmission resource, and
wherein L is a positive integer.

16. A non-transitory computer-readable storage medium storing instructions that, when executed, cause a device to perform operations comprising:
obtaining information related to a transmission resource; and
performing transmission based on L sub-resource groups within the transmission resource,
wherein a transport block size for the transmission is determined based on a size of a sub-resource group within the transmission resource, and
wherein L is a positive integer.

17. A method, comprising:
transmitting information related to a transmission resource; and
performing reception based on L sub-resource groups within the transmission resource,
wherein a transport block size for the reception is determined based on a size of a sub-resource group within the transmission resource, and
wherein L is a positive integer.

18. A base station, comprising:
at least one transceiver;
at least one processor; and
at least one memory connected to the at least one processor and storing instructions that, based on being executed by the at least one processor, cause the base station to perform operations comprising:
transmitting information related to a transmission resource; and
performing reception based on L sub-resource groups within the transmission resource,
wherein a transport block size for the reception is determined based on a size of a sub-resource group within the transmission resource, and
wherein L is a positive integer.

19. A processing device adapted to control a base station, the processing device comprising:
at least one processor; and
at least one memory connected to the at least one processor and storing instructions that, based on being executed by the at least one processor, cause the base station to perform operations comprising:
transmitting information related to a transmission resource; and
performing reception based on L sub-resource groups within the transmission resource,
wherein a transport block size for the reception is determined based on a size of a sub-resource group within the transmission resource, and
wherein L is a positive integer.

20. A non-transitory computer-readable storage medium storing instructions that, when executed, cause a base station to perform operations comprising:
transmitting information related to a transmission resource; and
performing reception based on L sub-resource groups within the transmission resource,
wherein a transport block size for the reception is determined based on a size of a sub-resource group within the transmission resource, and
wherein L is a positive integer.
